# EUROPÄISCHE PATENTSCHRIFT

(11) **EP 2 109 020 B1**
(45) Veröffentlichungstag und Bekanntmachung des Hinweises auf die Patenterteilung: **28.11.2012**
(21) Anmeldenummer: 08007143.4
(22) Anmeldetag: 10.04.2008
(51) Int. Cl.: G05B 19/418

(54) **Automatisierungssystem und Verfahren zur Diagnose, Anpassung oder Optimierung eines Automatisierungsgeräts**
Automation system and method for diagnosis, customisation and optimisation of automation device
Système d'automatisation et procédé de diagnostic, adaptation ou optimisation d'un appareil d'automatisation

(43) Veröffentlichungstag der Anmeldung: 14.10.2009
(73) Patentinhaber: SIEMENS AKTIENGESELLSCHAFT, 80333 München (DE)
(72) Erfinder: Danz, Mirko, 91058 Erlangen (DE); Extra, Johannes, 91052 Erlangen (DE)

(56) Entgegenhaltungen:
- EP-A- 1 422 629
- EP-A- 1 594 023
- DE-A1- 10 346 478

## Beschreibung

Die Erfindung betrifft ein Automatisierungssystem umfassend mindestens ein, bevorzugt eine Anzahl an Automatisierungsgeräten.

Zur Steuerung komplexer technischer Anlagen werden zunehmend immer komplexere Automatisierungssysteme eingesetzt. Bei der Planung einer modernen technischen Anlage muss daher auch eine umfangreiche Planung des Automatisierungssystems für die technische Anlage erfolgen. Das Automatisierungssystem selbst ist in ein meist ebenfalls recht komplexes Kommunikationsnetzwerk eingebunden, damit der reibungslose Datenaustausch und das Zusammenspiel der Automatisierungsgeräte gewährleistet sind. Da die Anforderungen an die technische Anlage und somit an das Automatisierungssystem nicht starr, sondern üblicherweise sehr flexibel sind, ist eine häufige Überarbeitung, Diagnose oder Anpassung der Automatisierungsfunktionalität des Automatisierungssystems erforderlich.

Beispielsweise kann es notwendig sein, zur Erfüllung weiterer Automatisierungsaufgaben zusätzliche Automatisierungsgeräte vorzusehen. Oder es ist notwendig, im Sinne einer Fehlererkennung eine systemweite Diagnose durchzuführen, um eine Fehlfunktion aufzuspüren. Weiterhin kann es erforderlich sein, in bestimmten Automatisierungsgeräten realisierte Automatisierungsfunktionen zu modifizieren oder zu optimieren, um den technischen Gesamtprozess zu fördern. In automatisierten Prozessen ist die Erfassung der Produktionsdaten in den einzelnen Automatisierungsgeräten organisiert. Für diese Produktionsdaten, z.B. Chargenidentifikationen, kann es notwendig sein, diese an einer zentralen Stelle zu sammeln und dort zu archivieren. Schließlich ist auch die Softwarepflege des Automatisierungssystems ein wichtiger Aspekt der Funktions- und Werterhaltung des Automatisierungssystems.

Zur Erfüllung dieser und anderer zahlreicher Aufgaben des Automatisierungssystems ist es bekannt, verschiedene, separate Werkzeuge einzusetzen. Beispielsweise gibt es Engineering-Systeme, um Kommunikationsverbindungen im Automatisierungssystem zu den verschiedenen Automatisierungsgeräten einzurichten und aufzubauen. Es steht beispielsweise eine Funktion "Life-List" zum Erkennen neuer Kommunikationsteilnehmer zur Verfügung. Weiterhin können Diagnose-Softwarewerkzeuge eingesetzt werden, um Zustandsinformationen des Automatisierungssystems zu ermitteln und etwaige Fehler zu erkennen. Schließlich sind so genannte ftp-Funktionen ("file transfer protocol") zum Datentransfer im Automatisierungssystem bekannt, um beispielsweise Programme und Daten zu übertragen.

Der Anwender des Automatisierungssystems musste bisher je nach aktuell vorliegender Aufgabe manuell und gezielt das hierfür geeignete Werkzeug auswählen und zum Einsatz bringen.

Diese manuelle Verfahrensweise ist jedoch fehleranfällig, da es sehr stark auf der Intuition und der Erfahrung des Anwenders beruht und der Anwender eine sich wiederholende Routinearbeit durchführen muss.

Aus der EP 1 594 023 A ist ein Ansatz bekannt, bei dem ein Steuergerät als Master angeschlossene Salves, z.B. Sensoren, anhand von Kennungen identifiziert und in Ansehung der Identifikation auf dem Steuergerät Funktionseinheiten zur Verarbeitung der Sensordaten zusammenstellt.

Aus der EP 1 422 629 A ist bekannt, eine Parametrieroberfläche für eine Mehrzahl von Einheiten einer Werkzeugmaschine jeweils in Ansehung der von der Werkzeugmaschine aktuell umfassten Einheiten zu erstellen, so dass die Oberfläche stets an die Konfiguration der Werkzeugmaschine angepasst ist. Aus der DE 103 46 478 A ist schließlich ein Verfahren zum Softwareupdate eines Automatisierungssystems über Internet bekannt.

Der Erfindung liegt daher die Aufgabe zugrunde, ein Automatisierungssystem anzugeben, welches weitgehend selbstständig auf Änderungen seiner Topologie oder Automatisierungsfunktionen reagieren kann und insbesondere die erforderlichen Diagnose- und/oder Optimierungsmaßnahmen einleitet.

Die Aufgabe wird erfindungsgemäß gelöst durch ein Automatisierungssystem umfassend folgende Komponenten:

Mindestens ein Automatisierungsgerät zur Realisierung einer Anzahl an Automatisierungsfunktionen,
- ein Steuergerät zur Ansteuerung des mindestens einen Automatisierungsgeräts, wobei das Steuergerät eine Anzahl an Datensätzen mit Handlungsanweisungen für eine Vielzahl an verschiedenen Typen von Automatisierungsgeräten mit entsprechenden Automatisierungsfunktionen umfasst, wobei das Steuergerät bedarfsweise selbst als Automatisierungsgerät (3) ausgebildet sein kann, und
- ein Kommunikationsnetz zur Kommunikation zwischen dem Steuergerät und dem mindestens einen Automatisierungsgerät, wobei das Steuergerät dazu eingerichtet ist, im Kommunikationsnetz angeschlossene Automatisierungsgeräte zu identifizieren, die Automatisierungsfunktionen aus den identifizierten Automatisierungsgeräten auszulesen, anhand der ausgelesenen Automatisierungsfunktionen mindestens einen Datensatz für jedes identifizierte Automatisierungsgerät zu identifizieren, und jedes identifizierte Automatisierungsgerät zur Ausführung der Handlungsanweisungen des mindestens einen identifizierten Datensatzes zu veranlassen bzw. selbst auszuführen, falls das Steuergerät (5) selbst als Automatisierungsgerät (5) ausgebildet ist.

Die Erfindung geht dabei von der Überlegung aus, einen Katalog an Handlungsanweisungen für eine Vielzahl an verschiedenen Typen an Automatisierungsgeräten im Automatisierungssystem, und zwar auf dem Steuergerät, vorzuhalten, so dass nach einer Identifikation der Automatisierungsfunktionen eines beispielsweise neu angeschlossenen Automatisierungsgeräts auf den Typ des neu angeschlossenen Automatisierungsgeräts geschlossen werden kann, und danach aus dem Katalog der Handlungsanweisungen, welche in Form einer Anzahl an Datensätzen auf dem Steuergerät gespeichert sind, die passenden und erforderlichen Handlungsanweisungen herauszusuchen und automatisch auf dem Automatisierungsgerät bzw. auf dem Steuergerät selbst ablaufen zu lassen, falls letzteres selbst als Automatisierungsgerät ausgebildet ist.

Die Datensätze mit den Handlungsanweisungen für eine Vielzahl an verschiedenen Typen von Automatisierungsgeräten können selbstverständlich auch auf einer separaten Datenbank gespeichert sein, so dass das Steuergerät im Sinne des Patentanspruchs auch funktional zu verstehen ist.

Bevorzugt umfassen die Handlungsanweisungen folgende Aktivitäten:
- Auslesen von Daten aus dem Automatisierungsgerät durch das Steuergerät,
- Verarbeiten der ausgelesenen Daten zu Verarbeitungsergebnissen durch das Steuergerät und
- Schreiben der Verarbeitungsergebnisse in das Automatisierungsgerät durch das Steuergerät.

Die Verarbeitungsergebnisse können auch dazu dienen, durch das Automatisierungsgerät anhand der Verarbeitungsergebnisse im Steuergerät nach weiteren Handlungsanweisungen zu suchen und in das Automatisierungsgerät zu laden.

Die Automatisierungsfunktionen des oder der Automatisierungsgeräte können beispielsweise einen Produktionsprozess betreffen, und die Handlungsanweisungen können ein Auslesen von Produktionsdaten des Produktionsprozesses sowie ein Schreiben von verarbeiteten Produktionsdaten in das Automatisierungsgerät umfassen.

Bevorzugt umfassen hierbei die verarbeiteten Produktionsdaten eine Rezeptur des Produktionsprozesses und/oder ein Steuerprogramm für den Produktionsprozess und/oder ein Wartungsprogramm für das Automatisierungsgerät.

Bei den letztgenannten Ausführungsformen wird der durch das Automatisierungsgerät gesteuerte Produktionsprozess automatisch optimiert, indem in den Datensätzen des Steuergeräts vorhandene Handlungsanweisungen passend zu dem oder den Automatisierungsgerät(en) aufgefunden und im Sinne einer Optimierung des Gesamtprozesses an die korrekte ausführende Stelle übermittelt und dort ausgeführt werden.

Beispielsweise tragen die Rezeptur und/oder das Steuerprogramm dazu bei, den Produktionsprozess zu verbessern. Das Wartungsprogramm sorgt für die Funktionsfähigkeit des oder der Automatisierungsgeräte.

Weitere Ausführungsformen der Erfindung betreffen beispielsweise die Diagnose des Automatisierungssystems, wobei die Handlungsanweisungen ein Auslesen von Geräte- und/oder Betriebszustandsinformationen des oder der Automatisierungsgeräte umfassen.

Hierbei ist bevorzugt von den Handlungsanweisungen weiterhin ein Laden eines Reparaturprogramms in das Automatisierungsgerät umfasst, wobei das Reparaturprogramm abgestimmt ist auf in den Geräte- und/oder Betriebszustandsinformationen entdeckte Defekte.

Die Handlungsanweisungen können weiterhin anhand der Geräte-und/oder Betriebszustandsinformationen eine Diagnose durchführen und das Diagnoseergebnis entsprechend anzeigen.

Die Datensätze des Steuergeräts umfassen beispielsweise eine große Anzahl an verschiedenen Fehlerszenarien und deren Behebung. Tritt nun bei einem Automatisierungsgerät ein Problem auf, so kann nun mittels des Auslesens dessen Automatisierungsfunktionen sein Typ ermittelt werden und mittels des Auslesens seiner Betriebs- und/oder Zustandsinformationen können die möglichen Fehlerbehebungsroutinen in den Handlungsanweisungen der identifizierten Datensätze aufgespürt und durchgeführt werden.

Die Erfindung führt weiterhin zu einem Verfahren zur Diagnose, Anpassung oder Optimierung mindestens eines Automatisierungsgeräts, wobei das Automatisierungsgerät an ein Kommunikationsnetz angeschlossen ist und eine Anzahl an Automatisierungsfunktionen bereitstellt, mit folgenden Schritten:
- Bereitstellen eines Steuergeräts zur Ansteuerung des mindestens einen Automatisierungsgeräts, wobei das Steuergerät eine Anzahl an Datensätzen mit Handlungsanweisungen für eine Vielzahl an verschiedenen Typen von Automatisierungsgeräten ) mit entsprechenden Automatisierungsfunktionen umfasst,
- Anschließen des Steuergeräts an das Kommunikationsnetz,
- Identifizieren von im Kommunikationsnetz angeschlossenen Automatisierungsgeräten durch das Steuergerät,
- Auslesen der Automatisierungsfunktionen der identifizierten Automatisierungsgeräte durch das Steuergerät,
- Identifizierung mindestens eines Datensatzes für jedes identifizierte Automatisierungsgerät anhand der ausgelesenen Automatisierungsfunktionen, und
- Veranlassen jedes identifizierten Automatisierungsgeräts zur Durchführung der Handlungsanweisungen des mindestens einen identifizierten Datensatzes durch das Steuergerät, wobei das Steuergerät (5) die Handlungsanweisungen selbst ausführen kann, falls es als Automatisierungsgerät (3) ausgebildet ist.

Bevorzugte Ausführungen sind in den entsprechenden abhängigen Patentansprüchen niedergelegt.

Im Folgenden ist ein Ausführungsbeispiel der Erfindung näher dargestellt.

Es zeigt:
- Figur: ein erfindungsgemäßes Automatisierungssystem.

Ein erfindungsgemäßes Automatisierungssystem 1 umfasst eine Anzahl an Automatisierungsgeräten 3, sowie ein Steuergerät 5, welche untereinander mittels eines Kommunikationsnetzes 11 verbunden sind. Das Kommunikationsnetz 11 ist beispielsweise ein Bussystem, z.B. PCI.

Die Automatisierungsgeräte 3 sind zur Steuerung eines technischen Prozesses eingerichtet und umfassen jeweils Automatisierungsfunktionen 13.

Die Automatisierungsgeräte 3 sind unterschiedlichen Typs, was sich beispielsweise durch unterschiedliche Automatisierungsfunktionen 13 ausdrückt, welche durch die Automatisierungsgeräte 3 jeweils bereitgestellt werden.

Das Steuergerät 5 umfasst eine Anzahl an Datensätzen 7, welche Handlungsanweisungen 9 für die Automatisierungsgeräte 3 umfassen. Die Datensätze 7 können hierbei direkt auf dem Steuergerät 5 oder in einer separaten Datenbank gespeichert sein.

Das Steuergerät 5 ist dazu eingerichtet, die am Kommunikationsnetz 11 angeschlossenen oder neu hinzukommenden Automatisierungsgeräte 3 zu identifizieren, indem es die Automatisierungsfunktionen 13 der jeweiligen Automatisierungsgeräte 3 ausliest und dadurch den Typ des jeweiligen Automatisierungsgeräts 3 erkennt.

Da die Datensätze 7 Handlungsanweisungen 9 für eine Vielzahl an verschiedenen Typen an Automatisierungsgeräten umfassen, kann nun das Steuergerät 5 anhand der ausgelesenen Automatisierungsfunktionen 13 die auf den entsprechend identifizierten Typ des Automatisierungsgeräts 3 abgestimmten Handlungsanweisungen 9 identifizieren und automatisch auf dem jeweiligen Automatisierungsgerät 3 und/oder auf dem Steuergerät 5 ablaufen lassen, falls letzteres selbst als Automatisierungsgerät ausgebildet ist.

Beispielsweise kann das Steuergerät 5 zyklisch nach Automatisierungsgeräten 3 im Kommunikationsnetz 11 suchen. Sobald das Steuergerät 5 ein neues Automatisierungsgerät 3 findet, liest es aus diesem Automatisierungsgerät 3 dessen Automatisierungsfunktionen 13 aus. Diese Automatisierungsfunktionen 13 repräsentieren den Typ des Automatisierungsgeräts 3. In den Datensätzen 7 des Steuergeräts 5 sind zu den ausgelesenen Automatisierungsfunktionen 13 Informationen umfassend die genannten Handlungsanweisungen 9 hinterlegt. Und diese Handlungsanweisungen 9 kann nun das Steuergerät 5 automatisch und selbstständig durch das Automatisierungsgerät 3 ausführen lassen.

Hierbei kann es sich beispielsweise um das Diagnostizieren des Gerätezustands des oder der Automatisierungsgeräte 3 handeln. Weiterhin kann es sich um das Lesen eines aktuellen Zustands der momentan vom Automatisierungsgerät 3 abgearbeiteten Automatisierungsaufgabe handeln. Auch kann das Steuergerät 5 beispielsweise Produktionsdaten aus dem Automatisierungsgerät 3, wie beispielsweise Chargen-Informationen oder Rezepturen, auslesen. Neben dem Lesen von Daten aus dem oder den Automatisierungsgeräten 3 kann das Steuergerät 5 weiterhin Daten in diese Automatisierungsgeräte 3 laden, wie beispielsweise neue Rezepturen, Steuerprogramme, weitere Daten und so weiter. Schließlich können auch Wartungs- und/oder Reparaturprogramme in die Automatisierungsgeräte 3 zur Behebung von Defekten geladen werden.

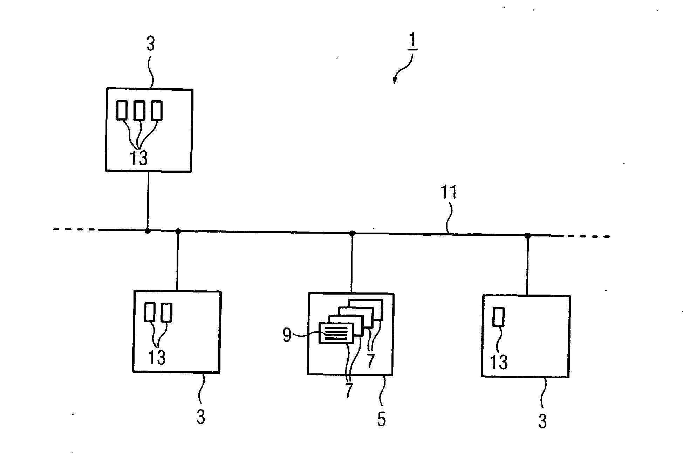

## Patentansprüche

1. Automatisierungssystem (1), umfassend folgende Komponenten:
- mindestens ein Automatisierungsgerät (3) zur Realisierung einer Anzahl an Automatisierungsfunktionen (13),
- ein Steuergerät (5) zur Ansteuerung des mindestens einen Automatisierungsgeräts (3),
und
- ein Kommunikationsnetz (11) zur Kommunikation zwischen dem Steuergerät (5) und dem mindestens einen Automatisierungsgerät (3),
wobei das Steuergerät (5) dazu eingerichtet ist, im Kommunikationsnetz (11) angeschlossene Automatisierungsgeräte (3) zu identifizieren,
**dadurch gekennzeichnet, dass**
das Steuergerät (5) eine Anzahl an Datensätzen (7) mit Handlungsanweisungen (9) für eine Vielzahl an verschiedenen Typen von Automatisierungsgeräten (3) mit entsprechenden Automatisierungsfunktionen (13) umfasst und
das Steuergerät (5) weiter dazu eingerichtet ist,
die Automatisierungsfunktionen (13) aus den identifizierten Automatisierungsgeräten (3) auszulesen,
anhand der ausgelesenen Automatisierungsfunktionen (13) mindestens einen Datensatz (7) für jedes identifizierte Automatisierungsgerät (3) zu identifizieren, und jedes identifizierte Automatisierungsgerät (3) zur Ausführung der Handlungsanweisungen (9) des mindestens einen identifizierten Datensatzes (7) zu veranlassen.

2. Automatisierungssystem (1) nach Anspruch 1, wobei die Handlungsanweisungen (9) folgende Aktivitäten umfassen:
- Auslesen von Daten aus dem Automatisierungsgerät (3) durch das Steuergerät (5),
- Verarbeiten der ausgelesenen Daten zu Verarbeitungsergebnissen durch das Steuergerät (5), und
- Schreiben der Verarbeitungsergebnisse oder aus den Verarbeitungsergebnissen abgeleitete Datensätze in das Automatisierungsgerät (3) durch das Steuergerät (5).

3. Automatisierungssystem (1) nach Anspruch 1 oder 2, wobei die Automatisierungsfunktionen (13) des Automatisierungsgeräts (3) einen Produktionsprozess betreffen, und
die Handlungsanweisungen (9) ein Auslesen von Produktionsdaten des Produktionsprozesses sowie ein Schreiben von verarbeiteten Produktionsdaten in das Automatisierungsgerät (3) umfassen.

4. Automatisierungssystem (1) nach Anspruch 3, wobei die verarbeiteten Produktionsdaten eine Rezeptur des Produktionsprozesses und/oder ein Steuerprogramm für den Produktionsprozess und/oder ein Wartungsprogramm für das Automatisierungsgerät (3) umfassen.

5. Automatisierungssystem (1) nach einem der Ansprüche 1 bis 4, wobei die Handlungsanweisungen (9) ein Auslesen von Geräte- und/oder Betriebszustandsinformationen des Automatisierungsgeräts (9) umfassen.

6. Automatisierungssystem (1) nach Anspruch 5, wobei die Handlungsanweisungen (9) weiterhin ein Laden eines Reparaturprogramms in das Automatisierungsgerät (3) umfassen, wobei das Reparaturprogramm abgestimmt ist auf in den Geräte - und/oder Betriebszustandsinformationen entdeckte Defekte.

7. Verfahren zur Diagnose, Anpassung oder Optimierung mindestens eines Automatisierungsgeräts(3), wobei das Automatisierungsgerät (3) an ein Kommunikationsnetz (11) angeschlossen ist und eine Anzahl an Automatisierungsfunktionen (13) bereitstellt, mit folgenden Schritten:
- Bereitstellen eines Steuergeräts (5) zur Ansteuerung des mindestens einen Automatisierungsgeräts (3),
- Anschließen des Steuergeräts (5) an das Kommunikationsnetz (11),
- Identifizieren von im Kommunikationsnetz (11) angeschlossenen Automatisierungsgeräten (3) durch das Steuergerät (5),
**dadurch gekennzeichnet, dass** das Steuergerät (5) eine Anzahl an Datensätzen (7) mit Handlungsanweisungen (9) für eine Vielzahl an verschiedenen Typen von Automatisierungsgeräten (3) mit entsprechenden Automatisierungsfunktionen (13) umfasst und durch folgende weitere Verfahrensschritte:
- Auslesen der Automatisierungsfunktionen (13) der identifizierten Automatisierungsgeräte (3) durch das Steuergerät (5),
- Identifizierung mindestens eines Datensatzes (7) für jedes identifizierte Automatisierungsgerät (3) anhand der ausgelesenen Automatisierungsfunktionen (13), und
- Veranlassen jedes identifizierten Automatisierungsgeräts (13) zur Durchführung der Handlungsanweisungen (9) des mindestens einen identifizierten Datensatzes (7) durch das Steuergerät (5).

8. Verfahren nach Anspruch 7, wobei die Handlungsanweisungen (9) folgende Aktivitäten umfassen:
- Auslesen von Daten aus dem Automatisierungsgerät (3) durch das Steuergerät (5),
- Verarbeiten der ausgelesenen Daten zu Verarbeitungsergebnissen durch das Steuergerät (5), und
- Schreiben der Verarbeitungsergebnisse in das Automatisierungsgerät (3) durch das Steuergerät (5).

9. Verfahren nach Anspruch 7 oder 8, wobei die Automatisierungsfunktionen (13) des Automatisierungsgeräts (3) einen Produktionsprozess betreffen, und
die Handlungsanweisungen (9) ein Auslesen von Produktionsdaten des Produktionsprozesses sowie ein Schreiben von verarbeiteten Produktionsdaten in das Automatisierungsgerät (3) umfassen.

10. Verfahren nach Anspruch 9, wobei die verarbeiteten Produktionsdaten eine Rezeptur des Produktionsprozesses und/oder ein Steuerprogramm für den Produktionsprozess und/oder ein Wartungsprogramm für das Automatisierungsgerät (3) umfassen.

11. Verfahren nach einem der Ansprüche 7 bis 10, wobei die Handlungsanweisungen (9) ein Auslesen von Geräte- und/oder Betriebszustandsinformationen des Automatisierungsgeräts (3) umfassen.

12. Verfahren nach Anspruch 11, wobei die Handlungsanweisungen (9) weiterhin ein Laden eines Reparaturprogramms in das Automatisierungsgerät (3) umfassen, wobei das Reparaturprogramm abgestimmt ist auf in den Geräte- und/oder Betriebszustandsinformationen entdeckte Defekte.

## Claims

1. Automation system (1) comprising the following components:
- At least one automation device (3) for realising a number of automation functions (13),
- a control device (5) for controlling the at least one automation device (3) and,
- a communication network (11) for communication between the control device (5) and the at least one automation device (3), with the control device (5) being configured to identify connected automation devices (3) in the communication network (11),
**characterised in that**
the control device (5) includes a number of data records (7) with handling instructions (9) for a plurality of different types of automation devices (3) with corresponding automation functions (13) and the control device (5) is also configured to read out the automation functions (13) from the identified automation devices (3), to identify at least one data record (7) for each identified automation device (3) with the aid of the read-out automation functions (13), and to initiate each identified automation device (3) for execution of the handling instructions (9) of the at least one identified data record (7).

2. Automation system (1) according to claim 1, with the handling instructions (9) comprising the following activities:
- Reading-out of data from the automation device (3) by the control device (5),
- Processing of the read-out data into processing results by the control device (5), and
- Writing of the processing results or of data records derived from the processing results into the automation device (3) by the control device (5).

3. Automation system (1) according to claim 1 or 2, with the automation functions (13) of the automation device (3) relating to a production process, and
the handling instructions (9) comprising the reading-out of production data of the production process as well as the writing of processed production data to the automation device (3).

4. Automation system (1) according to claim 3, with the processed production data comprising a formulation of the production process and/or a control program for the production process and/or a maintenance program for the automation device (3).

5. Automation system (1) according to one of claims 1 to 4, with the handling instructions (9) comprising the reading-out of device and/or operating status information of the automation device (9).

6. Automation system (1) according to claim 5, with the handling instructions (9) furthermore including the loading of a repair program into the automation device (3), with the repair program being adjusted in accordance with defects discovered in the device and/or operating status information.

7. Method for the diagnosis, adjustment or optimisation of at least one automation device (3), with the automation device (3) being connected to a communication network (11) and providing a number of automation functions (13), comprising the following steps:
- Provision of a control device (5) for controlling the at least one automation device (3),
- Connection of the control device (5) to the communication network (11),
- Identification by the control device (5) of automation devices (3) connected in the communication network (11),
**characterised in that**
the control device (5) includes a plurality of data records (7) with handling instructions (9) for a plurality of different types of automation devices (3) with corresponding automation functions (13) and by means of the following further method steps:
- Reading-out by the control device (5) of the automation functions (13) of the identified automation devices (3),
- Identification of at least one data record (7) for each identified automation device (3) with the aid of the read-out automation functions (13), and
- Initiation by the control device (5) of each identified automation device (3) for the execution of the handling instructions (9) of the at least one identified data record (7).

8. Method according to claim 7, with the handling instructions (9) comprising the following activities:
- Reading-out of data from the automation device (3) by the control device (5),
- Processing of the read-out data into processing results by the control device (5), and
- Writing of the processing results into the automation device (3) by the control device (5).

9. Method according to claims 7 or 8, with the automation functions (13) of the automation device (3) relating to a production process, and
the handling instructions (9) comprise the reading-out of production data of the production process as well as the writing of processed production data to the automation device (3).

10. Method according to claim 9, with the processed production data comprising a formulation of the production process and/or a control program for the production process and/or a maintenance program for the automation device (9).

11. Method according to one of claims 7 to 10, with the handling instructions (9) comprising the reading-out of device and/or operating status information of the automation device (3).

12. Method according to claim 11, with the handling instructions (9) furthermore including the loading of a repair program into the automation device (3), with the repair program being adjusted in accordance with defects discovered in the device and/or operating status information.

## Revendications

1. Système ( 1 ) d'automatisation, comprenant les composants suivantes :
- au moins un appareil ( 3 ) d'automatisation, pour la réalisation d'un certain nombre de fonctions ( 13 ) d'automatisation,
- un appareil ( 5 ) de commande, pour la commande du au moins un appareil ( 3 ) d'automatisation,
- un réseau ( 11 ) de communication, pour la communication entre l'appareil ( 5 ) de commande et le au moins un appareil ( 3 ) d'automatisation,
dans lequel l'appareil ( 5 ) de commande est conçu pour identifier des appareils ( 3 ) d'automatisation raccordés au réseau ( 11 ) de communication,
**caractérisé en ce que**
l'appareil ( 5 ) de commande comprend un certain nombre de jeux ( 7 ) de données ayant des instructions ( 9 ) de traitement, pour une pluralité de types différents d'appareils ( 3 ) d'automatisation ayant des fonctions ( 13 ) d'automatisation correspondantes et l'appareil ( 5 ) de commande est conçu, en outre, pour lire les fonctions ( 13 ) d'automatisation dans les appareils ( 3 ) d'automatisation identifiés, pour, au moyen des fonctions ( 13 ) d'automatisation lues, identifier au moins un jeu ( 7 ) de données pour chaque appareil ( 3 ) d'automatisation identifié et pour faire que chaque appareil ( 3 ) d'automatisation identifié exécute les instructions ( 9 ) de traitement du au moins un jeu ( 7 ) de données identifié.

2. Système ( 1 ) d'automatisation suivant la revendication 1, dans lequel les instructions ( 9 ) de traitement comprennent les activités suivantes :
- lecture de données dans l'appareil ( 3 ) d'automatisation par l'appareil ( 5 ) de commande,
- transformation des données lues en des résultats de traitement par l'appareil ( 5 ) de commande, et
- écriture des résultats de la transformation ou de jeux de données déduits de résultats de la transformation dans l'appareil ( 3 ) d'automatisation par l'appareil ( 5 ) de commande.

3. Système ( 1 ) d'automatisation suivant la revendication 1 ou 2, dans lequel les fonctions ( 13 ) d'automatisation de l'appareil ( 3 ) d'automatisation concernent un processus de production et les instructions ( 9 ) de traitement comprennent une lecture de données de production du processus de production ainsi qu'une écriture de données de production traitées dans l'appareil ( 3 ) d'automatisation.

4. Système ( 1 ) d'automatisation suivant la revendication 3, dans lequel les données de production traitées comprennent une formulation du processus de production et/ou un programme de commande du processus de production et/ou un programme d'entretien de l'appareil ( 3 ) d'automatisation.

5. Système ( 1 ) d'automatisation suivant l'une des revendications 1 à 4, dans lequel les instructions ( 9 ) de traitement comprennent une lecture d'informations sur l'état et/ou le fonctionnement de l'appareil ( 9 ) d'automatisation.

6. Système ( 1 ) d'automatisation suivant la revendication 5, dans lequel les instructions ( 9 ) de traitement comprennent, en outre, un chargement d'un programme de réparation dans l'appareil ( 3 ) d'automatisation, le programme de réparation étant adapté à des défauts mis à jour dans les informations sur l'état et/ou de fonctionnement de l'appareil.

7. Procédé de diagnostic, d'adaptation ou d'optimisation d'au moins un appareil ( 3 ) d'automatisation, l'appareil ( 3 ) d'automatisation étant raccordé à un réseau ( 11 ) de communication et mettant à disposition un certain nombre de fonctions ( 13 ) d'automatisation, comprenant les stades suivante
- on se procure un appareil ( 5 ) de commande, pour commander le au moins un appareil ( 3 ) d'automatisation,
- on raccorde l'appareil ( 5 ) de commande au réseau ( 11 ) de communication,
- on identifie des appareils ( 3 ) d'automatisation raccordés au réseau ( 11 ) de communication par l'appareil ( 5 ) de commande,
**caractérisé en ce que**
- l'appareil ( 5 ) de commande a un certain nombre de jeux ( 7 ) de données ayant des instructions ( 9 ) de traitement pour une pluralité de types différents d'appareils ( 3 ) d'automatisation ayant des fonctions ( 13 ) d'automatisation correspondantes et par les autres stades de procédés suivantes :
- lecture des fonctions ( 13 ) d'automatisation des appareils ( 3 ) d'automatisation identifiés par l'appareil ( 5 ) de commande,
- identification d'au moins un jeu ( 7 ) de données pour chaque appareil ( 3 ) d'automatisation identifié au moyen des fonctions ( 13 ) d'automatisation lues, et
- l'appareil ( 5 ) de commande fait en sorte que chaque appareil ( 13 ) d'automatisation identifié effectue les instructions ( 9 ) de traitement du au moins un jeu ( 7 ) de données identifié.

8. Procédé suivant la revendication 7, dans lequel les instructions ( 9 ) de traitement comprennent les activités suivantes .
- lecture de données dans l'appareil ( 3 ) d'automatisation par l'appareil ( 5 ) de commande,
- transformation des données lues en des résultats de traitement par l'appareil ( 5 ) de commande, et
- écriture des résultats de la transformation dans l'appareil ( 3 ) d'automatisation par l'appareil ( 5 ) de commande.

9. Procédé suivant la revendication 7 ou 8, dans lequel les fonctions ( 13 ) d'automatisation de l'appareil ( 3 ) d'automatisation concernent un processus de production, et
les instructions ( 9 ) de traitement comprennent une lecture de données de production du processus de production ainsi qu'une écriture des données de production traitées dans l'appareil ( 3 ) d'automatisation.

10. Procédé suivant la revendication 9, dans lequel les fonctions ( 13 ) d'automatisation de l'appareil ( 3 ) d'automatisation concernent un processus de production et les instructions ( 9 ) de traitement comprennent une lecture de données de production du processus de production ainsi qu'une écriture de données de production traitées dans l'appareil ( 3 ) d'automatisation.

11. Procédé suivant l'une des revendications 7 à 10, dans lequel les instructions ( 9 ) de traitement comprennent une lecture d'information sur l'état et/ou le fonctionnement de l'appareil ( 9 ) d'automatisation.

12. Procédé suivant la revendication 11, dans lequel les instructions ( 9 ) de traitement comprennent, en outre, un chargement d'un programme de réparation dans l'appareil ( 3 ) d'automatisation, le programme de réparation étant adapté à des défauts mis à jour dans les informations sur l'état et/ou le fonctionnement de l'appareil.
